(19) Europäisches Patentamt / European Patent Office / Office européen des brevets

(11) **EP 2 602 897 B1**

(12) **FASCICULE DE BREVET EUROPEEN**

(45) Date de publication et mention
de la délivrance du brevet:
**17.09.2014 Bulletin 2014/38**

(51) Int Cl.:
*H02J 3/16* *(2006.01)*    *H02J 3/18* *(2006.01)*

(21) Numéro de dépôt: **12195929.0**

(22) Date de dépôt: **06.12.2012**

(54) **Compensateur d'énergie réactive et procédé de réduction du phénomène de papillotement associé**

Reaktionsenergiekompensator und Reduzierungsverfahren des damit verbundenen Flickerphänomens

Reactive power compensator and method for reducing the associated flickering phenomenon

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2011 FR 1161234**

(43) Date de publication de la demande:
**12.06.2013 Bulletin 2013/24**

(73) Titulaire: **GE Energy Power Conversion Technology Ltd
Rugby
Warwickshire CV21 1BU (GB)**

(72) Inventeurs:
• **Morati, Mathieu
90000 Belfort (FR)**
• **Terrien, Franck
90350 Evette Salbert (FR)**

(74) Mandataire: **Serjeants LLP
25 The Crescent
King Street
Leicester, LE1 6RX (GB)**

(56) Documents cités:
**US-A- 6 075 350      US-A1- 2005 035 815
US-A1- 2006 044 850**

EP 2 602 897 B1

Printed by Jouve, 75001 PARIS (FR)

**Description**

La présente invention concerne un compensateur d'énergie réactive propre à être relié électriquement à un réseau électrique alternatif comportant M phase(s), M étant supérieur ou égal à 1, du type comprenant :

- M bornes de connexion au réseau électrique alternatif, la ou chaque borne de connexion correspondant à une phase du réseau,
- au moins un bus de tension continue d'entrée propre à fournir de l'énergie réactive,
- au moins un onduleur relié au bus de tension continue et comportant des interrupteurs électroniques commandables propres à convertir la tension continue d'entrée en un tension alternative intermédiaire comportant M phase(s) et correspondant à une phase du courant intermédiaire, les bornes intermédiaires correspondant à une même phase étant reliées à la borne de connexion correspondante,
- un dispositif de calcul de signaux de commande des interrupteurs électroniques des onduleurs.

On connaît du document « Modern active filters and traditional passive filters » de H. Akagi, publié en 2006 dans « Bulletin of the polish academy of sciences - Technical sciences - Vol. 4 - n°3 », un compensateur d'énergie réactive du type précité. Six onduleurs sont connectés en parallèle les uns des autres, et reliés d'un côté à un banc de condensateurs, et de l'autre côté à un réseau triphasé. Les six onduleurs sont connectés entre eux, du côté du réseau triphasé, par l'intermédiaire d'un transformateur comportant six secondaires. Les signaux de commande des interrupteurs électroniques de ces onduleurs sont des signaux à modulation de largeur d'impulsion.

Un tel compensateur d'énergie réactive placé dans un réseau électrique permet de compenser la circulation de puissance réactive d'une charge connectée sur le réseau électrique qui affecte la qualité de la puissance électrique délivrée sur le réseau.

Néanmoins, dans un tel réseau électrique, des problèmes de papillotement, encore appelé problèmes de scintillement (en anglais *flicker*) peuvent surgir sur les appareils connectés au réseau, par exemple les écrans d'ordinateur ou les sources lumineuses. Ils correspondent à des phénomènes de fluctuations de la tension électrique délivrée par le réseau, causés par des perturbations électromagnétiques ou des variations de puissance sur le réseau causées par exemple par les (dé)connexions d'appareils à forte consommation électrique, tels que des fours à arc, des moteurs etc.

L'invention a pour but de diminuer ces problèmes de papillotement.

A cet effet, suivant un premier aspect, l'invention a pour objet un compensateur d'énergie réactive du type précité, **caractérisé en ce qu'il** comporte en outre des moyens de régulation, adaptés pour déterminer une valeur de courant actif cible circulant entre l'onduleur et le réseau propre à réguler la tension courante continue d'entrée par rapport à une valeur de référence fixée ;

le dispositif de calcul de signaux de commande des interrupteurs déterminant des signaux de commande en fonction de la valeur dudit courant actif cible déterminée ;

la valeur de courant actif cible étant déterminée à partir de l'erreur entre la valeur de référence et le carré de la tension continue du bus par l'intermédiaire d'une fonction de transfert dont la définition varie en fonction de la valeur courante de ladite tension continue.

Un tel compensateur d'énergie réactive permet de compenser l'énergie réactive de charges sur le réseau, tout en réduisant l'apparition de phénomènes de papillotement sur le réseau.

Dans des modes de réalisation, le compensateur d'énergie réactive suivant l'invention comporte en outre une ou plusieurs des caractéristiques suivantes :

- le bus de tension continue comprend un banc de condensateur(s), le banc de condensateur(s) comportant au moins un condensateur ;
- la transformée laplacienne de la fonction de transfert $C_{DC}(p)$ s'écrit :

$$C_{DC}(p) = K_{dc}$$

ou

$$C_{DC}(p) = K_{dc} + \frac{K_{idc}}{p}$$

avec

$$K_{dc} = A*[\,1 + B*f(Vc, Vref)\,] \text{ et } K_{idc} = C*[\,1 + D*f(Vc, Vref)\,] \text{ , A, B, C et D}$$

étant des constantes et f(Vc,Vref) étant une fonction dont les variables d'entrée sont les valeurs courantes de la tension d'entrée Vc et la valeur de référence Vref ;

- les moyens de régulation sont adaptés en outre pour déterminer une valeur de courant réactif cible circulant entre l'onduleur et le réseau en vue de compenser une énergie réactive d'une charge sur le réseau, le dispositif de calcul de signaux de commande des interrupteurs déterminant des signaux de commande en fonction de la valeur dudit courant réactif cible déterminée.

Suivant un deuxième aspect, la présente invention propose un procédé de réduction du phénomène de papillotement dans un réseau électrique alternatif, ledit procédé étant destiné à être mis en oeuvre dans un compensateur d'énergie réactive propre à être relié électriquement au réseau électrique alternatif comportant M phase(s), M étant supérieur ou égal à 1, ledit compensateur comprenant :

- M bornes de connexion au réseau électrique alternatif, la ou chaque borne de connexion correspondant à une phase du réseau,
- au moins un bus de tension continue d'entrée propre à fournir de l'énergie réactive,
- au moins un onduleur relié au bus de tension continue et comportant des interrupteurs électroniques commandables propres à convertir la tension continue d'entrée en un tension alternative intermédiaire comportant M phase(s) et correspondant à une phase du courant intermédiaire, les bornes intermédiaires correspondant à une même phase étant reliées à la borne de connexion correspondante,
- un dispositif de calcul de signaux de commande des interrupteurs électroniques des onduleurs,

ledit procédé étant **caractérisé en ce qu'il** comporte les étapes suivantes :

- détermination, par les moyens de régulation, d'une valeur de courant actif cible circulant entre l'onduleur et le réseau propre à réguler la tension courante continue d'entrée par rapport à une valeur de référence fixée, ladite valeur de courant actif cible étant déterminée à partir de l'erreur entre la valeur de référence et le carré de la tension continue du bus par l'intermédiaire d'une fonction de transfert dont la définition varie en fonction de la valeur courante de tension continue ;
- détermination, par le dispositif de calcul de signaux de commande des interrupteurs, des signaux de commande en fonction de la valeur dudit courant actif cible déterminée.

Ces caractéristiques et avantages de l'invention apparaîtront à la lecture de la description qui va suivre, donnée uniquement à titre d'exemple, et faite en référence aux dessins annexés, sur lesquels :

- la figure 1 représente un système de conversion dans un mode de réalisation de l'invention ;
- la figure 2 illustre les composantes actives et réactives d'un signal électrique de type courant ou tension ;
- la figure 3 représente un système linéaire en boucle fermée ;
- la figure 4 représente des moyens de commande dans un mode de réalisation de l'invention ;
- la figure 5 représente un système de conversion dans un mode de réalisation de l'invention ;
- la figure 6 est un organigramme d'un procédé dans un mode de réalisation de l'invention.

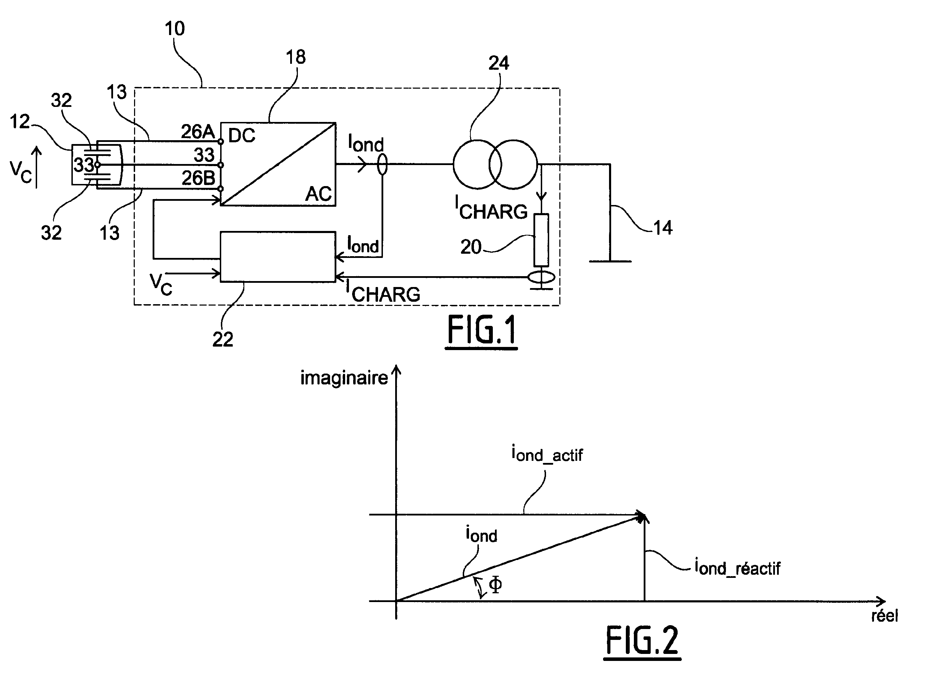

La figure 1 représente un système de conversion 10 d'un courant continu d'entrée en un courant alternatif polyphasé de sortie qui réalise également la conversion d'une tension continue d'entrée en une tension alternative polyphasée de sortie. Le système de conversion 10 est relié d'une part à une source 12 de courant continu et à un bus 13 de tension continue Vc. Il est relié d'autre part à un réseau électrique 14.

Le bus 13 de tension continue fournit une tension Vc, de valeur par exemple égale à 15 kV.

Le réseau électrique 14 est, par exemple, un réseau alternatif triphasé de tension élevée, typiquement de l'ordre de 33000 V.

Une charge, 20, par exemple un four à arc, est également reliée au réseau électrique 14.

Le système de conversion 10 de courant comprend un onduleur de tension 18, propre à convertir un courant continu d'entrée en un courant alternatif polyphasé de sortie. Cet onduleur est relié à la source 12 de courant, via le bus de tension continue 13.

Dans le mode de réalisation considéré, la source de courant 12 comporte un banc de deux condensateurs 32 séparés par un point neutre 33.

Le courant $I_{ond}$ apparaissant sur la figure 1 identifie un courant alternatif fourni en sortie de l'onduleur pour une phase quelconque.

Le système de conversion 10 comporte également des moyens 22 de commande de l'onduleur 18, adapté pour commander l'onduleur de manière à piloter le courant de sortie délivré par l'onduleur 18 pour chaque phase.

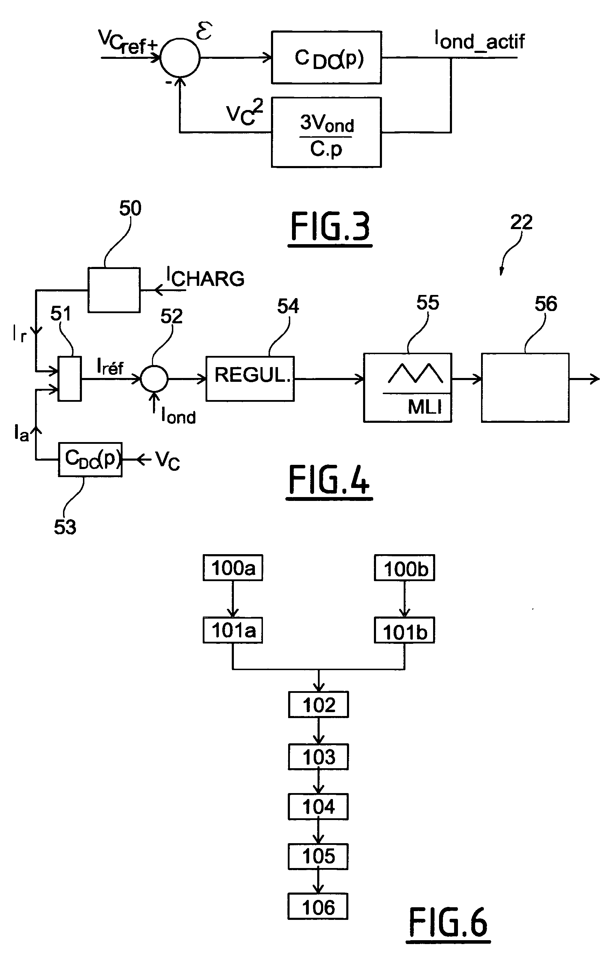

Le système de conversion 10 comporte également des impédances sur chaque phase, qui sont représentées en figure 3, connectées en sortie de l'onduleur 18 et un transformateur de tension 24. La sortie du transformateur 24 est reliée au réseau électrique 14.

La figure 2 fournit une présentation vectorielle d'un courant $I_{ond}$ fourni par le système de conversion 10 par rapport à une tension $V_{ond}$ délivrée sur le réseau 14 par le système de conversion 10. Le courant $I_{ond}$ est déphasé d'un angle $\phi$ par rapport à la tension $V_{ond}$. Sur la figure 2, on distingue la composante active (ou composante réelle) $I_{ond\_actif}$ du courant $I_{ond}$ parallèle à l'abscisse, en phase avec la tension $V_{ond}$, et la composante réactive (ou composante imaginaire) $I_{ond\_réactif}$ du courant $I_{ond}$ parallèle à l'ordonnée.

Dans le mode de réalisation considéré, le système de conversion 10 est un compensateur d'énergie réactive propre à compenser les variations d'énergie réactive sur le réseau alternatif 14, via la source 12 de courant continu et le bus 13 de tension continue, propres à fournir de l'énergie réactive, en ajustant les phases du courant électrique par rapport à celles de la tension électrique, délivrées sur le réseau.

L'onduleur de tension 18 comporte une borne positive d'entrée 26A, une borne négative d'entrée 26B, une borne au neutre 33 et M bornes de sortie. Chaque borne de sortie correspond à une phase respective du courant alternatif polyphasé de sortie propre à être délivré par l'onduleur. Le courant de sortie comporte une pluralité M de phases, M étant un nombre entier supérieur ou égal à un.

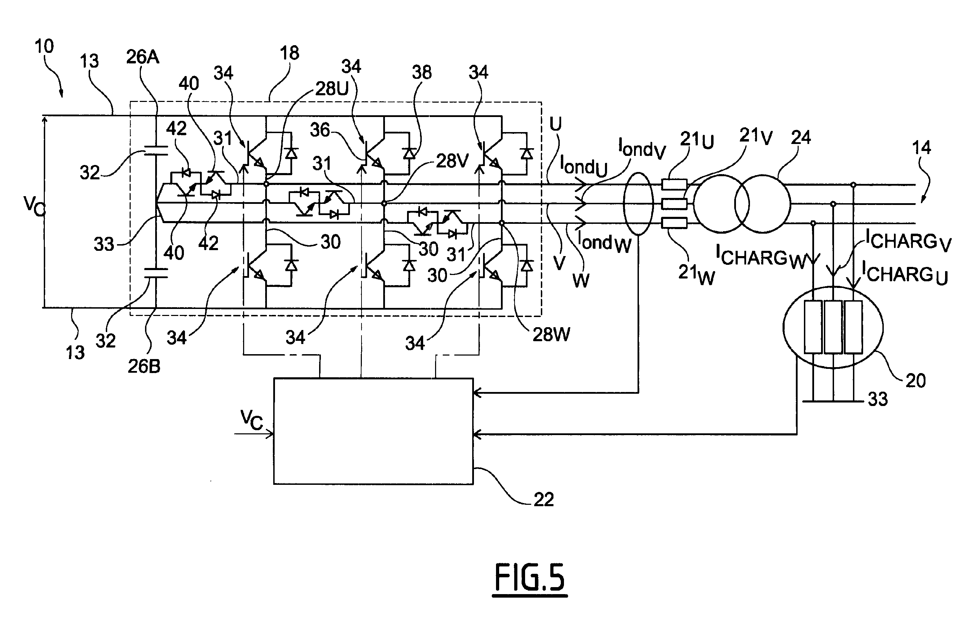

Dans l'exemple de réalisation de la figure 5, le nombre M de phases est égal à trois et l'onduleur de tension 18 est un onduleur triphasé trois niveaux clampé par le neutre.

L'onduleur triphasé 18 comprend une borne positive d'entrée 26A, une borne négative d'entrée 26B et trois bornes de sortie 28U, 28V, 28W correspondant chacune à une phase respective U, V, W.

L'onduleur 18 comprend en outre, pour chaque borne de sortie 28U, 28V, 28W, une branche de commutation 30 reliée entre les deux bornes d'entrée 26A, 26B et une branche de clampage 31 reliant le neutre à un point milieu de la branche de commutation associée. En sortie de l'onduleur 18, le courant $I_{ond}$, $I_{ondV}$, $I_{ondW}$ circule sur la phase respectivement, U, V, W.

La source de tension continue 12 comprend deux condensateurs 32 connectés en série entre les deux bornes d'entrée 26A, 26B, et reliés entre eux en un point milieu 33 formant le neutre.

En variante, chaque condensateur 32 est remplacé par une source de tension continue.

Chaque branche de commutation 30 comprend deux interrupteurs électriques commandables 34 connectés en série et dans le même sens, et reliés entre eux par un point milieu, chaque point milieu formant une borne de sortie 28U, 28V, 28W.

Comme connu en soi, chaque interrupteur électrique 34 est un interrupteur bidirectionnel en courant et unidirectionnel en tension. Chaque interrupteur électrique 34 comprend un transistor 36 et une diode 38 connectée en antiparallèle assurant ainsi des trajets de circulation bidirectionnelle de courant lorsque le transistor 36 est passant.

Tous les interrupteurs électriques 34 sont, par exemple, identiques. Le transistor 36 est, par exemple, un transistor bipolaire à grille isolée, également appelé transistor IGBT (de l'anglais Insulated Gate Bipolar Transistor). La grille de chaque transistor 36 est reliée aux moyens de commande 22 pour recevoir un signal de commande correspondant.

Chaque branche de clampage 31 est connectée entre le point milieu 33 et une borne de sortie 28U, 28V, 28W. Chaque branche de clampage 31 comporte deux transistors 40 connectés tête-bêche et en série. Elle comporte également deux diodes 42, chacune étant connectée en antiparallèle d'un transistor 40 respectif, assurant ainsi des trajets de circulation bidirectionnelle de courant lorsque le transistor 40 correspondant est passant.

Les transistors 40 sont, par exemple, des transistors IGBT.

Entre le système de conversion 10 et le transformateur 24, une inductance $21_U$, $21_V$, $21_W$, est disposée sur respectivement la phase U, V, W.

La charge 20 consomme un courant respectif $I_{CHARGU}$, $I_{CHARGV}$, $I_{CHARGW}$ sur la voie respectivement U, V, W.

Dans le mode de réalisation considéré, les moyens de commande 22 sont adaptés d'une part pour piloter et commander la compensation de la circulation de puissance réactive sur le réseau 14 et ainsi augmenter le facteur de puissance du réseau, et d'autre part pour piloter et commander la réduction des phénomènes de papillotement survenant sur le réseau 14.

Soit C la valeur de la capacité de la source de tension continue 12 exprimée en Farad, la puissance active $P_{ond}$ (t), fonction du temps t, qui est échangée entre l'onduleur 18 et le réseau 14 sur une phase considérée quelconque U, V ou W, peut être exprimée ainsi :

$$P_{ond}(t) = C\frac{dV_c}{dt} \times V_c = \frac{1}{2} \times C \times \frac{dV_c^2}{dt} \quad (1) ;$$

où $V_c$ est la tension aux bornes de la source de tension continue 12.

En utilisant la transformée de Concordia, puis la transformée de Park, cette équation (1) s'écrit de la manière suivante :

$$\frac{3}{2} \times V_{ond} \times I_{ond\_actif} = \frac{1}{2} \times C \times \frac{dV_c^2}{dt} \quad (2) ;$$

où $V_{ond}$ est la tension de sortie de l'onduleur dans le repère de Park, et $I_{ond\_actif}$ est la composante active courant dans le repère de Park en sortie de l'onduleur 18.

En utilisant la transformée de Laplace, l'équation (2) donne :

$$3 \times V_{ond} \times I_{ond\_actif} = C \times V_c^2(p) \times p \quad (3) ;$$

où p est l'opérateur de Laplace.

Dans le système de conversion 10 considéré, le pilotage de la valeur du courant $I_{and\_actif}$ permet de réguler la tension $V_c$ de la source de tension 12. La formule (3) décrit la relation entre le courant actif de l'onduleur $I_{ond\_actif}$ et la tension de la source de tension au carré. En contrôlant Iond_actif, on contrôle $V_c^2$ et donc la tension $V_c$.

Pour mettre en oeuvre ce pilotage, on détermine une valeur cible de courant actif en sortie d'onduleur 18 selon l'équation (4) :

$$I_{ond\_actif}(p) = C_{DC}(p) \times (V_{ref} - V_c^2(p)), \quad (4)$$

où $C_{DC}(p)$ est la fonction de transfert du régulateur $C_{DC}$, exprimée à l'aide de la transformation de Lapace, liant la transformée de Laplace du courant $I_{ond\_actif}(p)$ et la transformée de Laplace de l'erreur entre le carré de la tension aux bornes de la source de tension continue et une tension de référence de valeur fixée $V_{ref}$ telle qu'on souhaite stabiliser la tension $V_c$ de la source de courant continu 12 à la valeur $V_{ref}$.

Le système linéaire en boucle fermé correspondant aux équations 3 et 4 est représenté en figure 3.

La fonction de transfert correspondante en boucle ouverte FTBO(p) et la fonction de transfert correspondante en boucle fermée FTBF(p) s'écrivent donc :

$$FTBO = C_{DC}(p) \times 3 \times \frac{V_{ond}}{C \times p} = C_{DC}(p) \times \frac{K}{p} \quad (5)$$

avec

$$K = \frac{3.V_{ond}}{C} \approx cte$$

$$FTBF = \frac{1}{1 + \dfrac{p}{K \times C_{DC}(p)}} \quad (6)$$

Dans ces formules, $V_{ond}$ est une valeur que l'on peut considérer comme une constante en valeur moyenne. Cette affirmation est vraie car cette équation est développée depuis la formule (2) qui est exprimée dans le repère de Park.

La valeur de courant cible $I_{ond\_actif}$ déterminée à l'aide de cette boucle de régulation représentée en figure 3 correspond à la référence de courant actif que doit fournir le système de conversion 10 pour réguler la tension du bus de tension continue 13 à la valeur de référence $V_{ref}$.

Selon l'invention, le régulateur $C_{DC}(p)$ est réglable en fonction de la valeur courante mesurée de la tension $V_c$. Cette disposition a pour fonction d'assurer une régulation de la tension $V_c$ dans un intervalle fixé de valeurs autour de la valeur $V_{ref}$, tout en laissant la tension $V_c$ du bus de tension continue 13 fluctuer librement dans cet intervalle. Cette fluctuation a pour effet de diminuer le nombre de manifestations de scintillement dans le réseau 14.

Ainsi, tant que la valeur de la tension $V_c$ est bien à l'intérieur de l'intervalle de fluctuation, le régulateur $C_{DC}(p)$ est très lent, de l'ordre de la seconde. A l'inverse, plus la valeur de la tension approche des bornes de l'intervalle de fluctuation, plus le régulateur $C_{DC}(p)$ est rapide, afin que la valeur de la tension $V_c$ ne sorte pas de l'intervalle de fluctuation.

Dans un mode de réalisation, la formule de $C_{DC}(p)$ est la suivante :

$$C_{DC}(p) = \frac{1}{T \times K} = K_{DC} \qquad (7)$$

où K est le terme décrit en (5) qui est constant. C'est $K_{DC}$ qui doit varier en fonction de Vc. Pour augmenter la rapidité du régulateur il faut changer la valeur de $C_{DC}(p)$ et donc de $K_{DC}$ en fonction de Vc. La loi de variation $K_{DC}$ dans la formule (7) est par exemple : Kdc=A*[1+B*f($V_c$,$V_{ref}$)],

où f($V_c$,$V_{ref}$) est une fonction mathématique (fonction valeur absolue, fonction au carré, fonctions linéaires ou non linéaires, etc ...), dont les variables sont $V_c$ et $V_{ref}$. A et B sont des gains (non variables en fonction de $V_c$ et de $V_{ref}$) dépendant de plusieurs paramètres du système que l'on souhaite contrôler, comme par exemple la valeur de capacité de stockage du bus DC, la rapidité de commande du compensateur etc ...

Un tel correcteur $C_{DC}(p)$ est de type proportionnel.

Dans un autre mode de réalisation, la formule de $C_{DC}(p)$ est la suivante :

$$C_{DC}(p) = K_{dc} + \frac{K_{idc}}{p} \qquad (8)$$

où $K_{idc}$ et $K_{dc}$ peuvent varier selon plusieurs lois, par exemple :

$$Kdc = A * [\, 1 + B * f(V_c, V_{ref})\,]$$

$$Kidc = C * [\, 1 + D * f(V_c, V_{ref})\,]$$

où f($V_c$,$V_{ref}$) est une fonction mathématique (fonction valeur absolue, fonction au carré, fonctions linéaires ou non linéaires, etc ...), dont les variables sont $V_c$ et $V_{ref}$. A,B,C,D sont des gains dépendant de plusieurs paramètres du système que l'on souhaite contrôler, comme par exemple la valeur de capacité de stockage du bus DC, la rapidité de commande du compensateur etc ...

Un soustracteur 52 permet de calculer la différence entre ce courant cible résultant $I_{réf}$ et la valeur courante de courant $I_{ond}$ mesurée en sortie de l'onduleur.

La valeur de cette différence calculée est fournie en entrée d'un régulateur de courant 54. Ce régulateur 54 est propre à calculer, en fonction de la différence calculée, des signaux de tension modulante pour la phase considérée.

Ce régulateur est de type PI (Proportionnel Intégral) classiquement utilisé dans la régulation des systèmes bouclés (cf. par exemple http://en.wikipedia.ora/wiki/PID controller).

Ces signaux de tension modulante sont fournis en entrée d'un modulateur 55 adapté pour procéder à une modulation par largeur d'impulsion avec entrelacement des impulsions et déphasage correspondant à la phase considérée (cf http://en.wikipedia.org/wiki/Pulse-width-modulation pour une description générale d'un tel modulateur). Dans une étape, le modulateur est adapté pour comparer une tension modulante reçue en entrée à un signal triangulaire.

Les résultats de cette comparaison sont fournis en entrée d'un module de commande 56 propres à déterminer en fonction desdits résultats des signaux de commande destinés aux interrupteurs 34 de la phase considérée et à les appliquer à ces interrupteurs 34.

Sur la figure 6 sont représentées les étapes d'un procédé dans un mode de réalisation de l'invention, mis en oeuvre par le système de conversion 10.

Dans une étape 100a, un courant $I_{CHARG}$ circulant dans la charge 20 du réseau 14, relatif à une phase donnée, est mesuré.

Dans une étape 101 a, un courant cible réactif Ir à fournir par l'onduleur 18 est déterminé en fonction du courant circulant dans la charge 20 mesuré.

En parallèle de ces étapes 100a, 101 a, dans une étape 100b, un courant $I_{ond}$ circulant en sortie de l'onduleur 18 sur la phase considérée, est mesuré.

Dans une étape 101 b, un courant cible actif Ia à fournir par l'onduleur 18 est déterminé en fonction du courant circulant dans la charge 20 mesuré, tel que décrit ci-dessus à l'aide du régulateur $C_{DC}(p)$, conformément à la formule 4, permettant de réguler la valeur de la tension $V_c$ en diminuant les phénomènes de scintillement.

Dans une étape 102, les courants cibles Ir et Ia sont sommés, le résultat de cette somme déterminant une valeur $I_{réf}$ de courant cible résultant de cette somme.

Ce courant $I_{réf}$ est le courant cible, à fournir par l'onduleur 18 sur la phase considérée qui permet la compensation de la charge réactive d'une part et la réduction de problème de scintillement d'autre part.

Un tel correcteur $C_{DC}(p)$ est de type Proportionnel Intégral.

Les modules de traitement des moyens de commande 22 adaptés d'une part pour permettre de compenser l'énergie réactive sur le réseau 14 et d'autre part de réduire les problèmes de scintillement, sont décrits en référence à la figure 4.

On nommera $I_{CHARG}$ et $I_{ond}$, respectivement le courant dans la charge 20 et le courant délivré par l'onduleur qui sont relatifs à une même phase.

Un bloc de compensation de puissance réactive 50 reçoit en entrée des mesures du courant $I_{CHARG}$ consommé par la charge 20 et est adapté pour mettre en oeuvre un algorithme de détermination d'une valeur cible de courant Ir en sortie de l'onduleur 18 permettant de compenser la puissance réactive de la charge 20 sur la phase considérée.

Cet algorithme comprend les étapes suivantes :

- Etape 1 : Identifier à partir du courant $I_{CHARG}$ la valeur réactive et active de ce courant. La transformée de Park permet cette identification en séparant les courants sur deux axes en quadratures, qui correspondent aux parties réactive et active du courant mesuré.
- Etape 2 : La totalité du courant réactif identifié est envoyé en tant que référence de composante réactive au sommateur 51.
- Etape 3 : En fonction de la capacité de stockage d'énergie du bus DC, la totalité ou une partie du courant actif identifié à partir du courant $I_{CHARG}$ est envoyé en tant que référence de composante active au sommateur 51.

Ir correspond donc à la somme de ces deux courants déterminés en ces étapes 2 et 3.

Un bloc de régulation 53 reçoit en entrée la valeur courante de la tension aux bornes de la source de tension continue 12.

Le bloc de régulation 53 est adapté pour déterminer, en fonction de cette valeur, la formule du régulateur à appliquer $C_{DC}(p)$. Le bloc de régulation 53 est adapté pour calculer la valeur cible du courant actif Ia en sortie de l'onduleur 18, conformément à la formule 4, permettant de réguler la valeur de la tension $V_c$ en diminuant les phénomènes de scintillement.

Un sommateur 51 est adapté pour sommer les courants cibles Ir et Ia déterminés par le bloc de compensation de puissance réactive 50 et le bloc de régulation 53 et ainsi déterminer une valeur $I_{réf}$ de courant cible résultant de cette somme.

Ce courant $I_{réf}$ est le courant cible à fournir par l'onduleur sur la phase considérée qui permet la compensation de la charge réactive d'une part et la réduction de problème de scintillement d'autre part.

Dans une étape 103, la différence entre ce courant cible résultant $I_{réf}$ et la valeur courante de courant $I_{ond}$ mesurée en sortie de l'onduleur est calculée.

Dans une étape 104, des signaux de tension modulante pour la phase considérée sont déterminés, en fonction de la différence calculée, comme décrits plus haut.

Dans une étape 105, une modulation par largeur d'impulsion avec entrelacement des impulsions avec déphasage correspondant à la phase considérée est réalisée en fonction de ces signaux de tension modulante, comprenant une opération de comparaison entre une tension modulante et un signal triangulaire.

Dans une étape 106, des signaux de commande destinés aux interrupteurs 34 de la phase considérée sont déterminés en fonction des signaux de modulation et appliqués aux interrupteurs 34 de la phase considérée.

Les étapes relatives à la compensation de la charge réactive d'une part et à la réduction du papillotement peuvent, suivant les modes de réalisation, être mises en oeuvre séquentiellement ou parallèlement. Dans le cas où cela serait réalisé de façon séquentielle, la composante réactive du courant mesuré $I_{ond}$ est soustraite au courant réactif cible Ir, en vue de déterminer en fonction de cette différence les signaux de commande à appliquer aux commutateurs 34 pour compenser l'énergie réactive de la charge.

De même, la composante active du courant mesuré $I_{ond}$ est soustraite au courant actif cible la, en vue de déterminer en fonction de cette différence, les signaux de commande à appliquer aux commutateurs 34 pour réduire le papillotement sur le réseau.

L'invention permet donc à la fois de réduire l'apparition de phénomènes de scintillement sur le réseau 14, tout en compensant la puissance réactive de charges sur le réseau.

**Revendications**

1. Compensateur (10) d'énergie réactive propre à être relié électriquement à un réseau électrique alternatif (14) comportant M phase(s), M étant supérieur ou égal à 1, du type comprenant :

   - M bornes (28U, 28V, 28W) de connexion au réseau électrique alternatif (14), la ou chaque borne de connexion correspondant à une phase du réseau (U, V, W),
   - au moins un bus (13) de tension continue d'entrée ($V_c$) propre à fournir de l'énergie réactive,
   - au moins un onduleur (18) relié au bus de tension continue (13) et comportant des interrupteurs électroniques commandables (34) propres à convertir la tension continue d'entrée ($V_c$) en un tension alternative intermédiaire comportant M phase(s) et correspondant à une phase du courant intermédiaire, les bornes intermédiaires correspondant à une même phase étant reliées à la borne de connexion correspondante,
   - un dispositif (22) de calcul de signaux de commande des interrupteurs électroniques des onduleurs,
   **caractérisé en ce qu'il** comporte en outre des moyens de régulation (22), adaptés pour déterminer une valeur de courant actif cible circulant entre l'onduleur et le réseau propre à réguler la tension courante continue d'entrée ($V_c$) par rapport à une valeur de référence fixée ;
   le dispositif de calcul de signaux de commande des interrupteurs déterminant des signaux de commande en fonction de la valeur dudit courant actif cible déterminée ;
   la valeur de courant actif cible étant déterminée à partir de l'erreur entre la valeur de référence et le carré de la tension continue du bus par l'intermédiaire d'une fonction de transfert dont la définition varie en fonction de la valeur courante de ladite tension continue.

2. Compensateur (10) d'énergie réactive selon la revendication 1, dans lequel le bus de tension continue comprend un banc de condensateur(s) (12), le banc de condensateur(s) comportant au moins un condensateur.

3. Compensateur (10) d'énergie réactive selon la revendication 1 ou 2, dans lequel la transformée laplacienne de la fonction de transfert $C_{DC}(p)$ s'écrit :

$$C_{DC}(p) = K_{dc}$$

ou

$$C_{DC}(p) = K_{dc} + \frac{K_{idc}}{p}$$

avec

$$K_{dc} = A * [1 + B * f(Vc, Vref)] \text{ et } K_{idc} = C * [1 + D * f(Vc, Vref)], \text{ A, B, C et D}$$

étant des constantes et f(Vc,Vref) étant une fonction dont les variables d'entrée sont les valeurs courantes de la tension d'entrée Vc et la tension de référence Vref.

4. Compensateur (10) d'énergie réactive selon l'une quelconque des revendications précédentes, dans lequel les moyens de régulation sont adaptés en outre pour déterminer une valeur de courant réactif cible circulant entre l'onduleur et le réseau en vue de compenser une énergie réactive d'une charge sur le réseau, le dispositif de calcul de signaux de commande des interrupteurs déterminant des signaux de commande en fonction de la valeur dudit courant réactif cible déterminée.

5. Procédé de réduction du papillotement dans un réseau électrique alternatif, ledit procédé étant destiné à être mis en oeuvre dans un compensateur (10) d'énergie réactive propre à être relié électriquement au réseau électrique alternatif (14) comportant M phase(s), M étant supérieur ou égal à 1, ledit compensateur comprenant :

- M bornes (28U, 28V, 28W) de connexion au réseau électrique alternatif (14), la ou chaque borne de connexion correspondant à une phase du réseau (U, V, W),
- au moins un bus (13) de tension continue d'entrée ($V_c$) propre à fournir de l'énergie réactive,
- au moins un onduleur (18) relié au bus de tension continue (13) et comportant des interrupteurs électroniques commandables (34) propres à convertir la tension continue d'entrée ($V_c$) en un tension alternative intermédiaire comportant M phase(s) et correspondant à une phase du courant intermédiaire, les bornes intermédiaires correspondant à une même phase étant reliées à la borne de connexion correspondante,
- un dispositif (22) de calcul de signaux de commande des interrupteurs électroniques des onduleurs,

ledit procédé étant **caractérisé en ce qu'il** comporte les étapes suivantes :

- détermination, par les moyens de régulation (22), d'une valeur de courant actif cible circulant entre l'onduleur et le réseau propre à réguler la tension courante continue d'entrée ($V_c$) par rapport à une valeur de référence fixée, ladite valeur de courant actif cible étant déterminée à partir de l'erreur entre la valeur de référence et le carré de la tension continue du bus par l'intermédiaire d'une fonction de transfert dont la définition varie en fonction de la valeur courante de tension continue ;
- détermination, par le dispositif de calcul de signaux de commande des interrupteurs, des signaux de commande en fonction de la valeur dudit courant actif cible déterminée.

6. Procédé de réduction du papillotement selon la revendication 5, selon lequel la tension continue est fournie par un banc de condensateur(s) (12) comportant au moins un condensateur.

7. Procédé de réduction du papillotement selon la revendication 5 ou 6, selon lequel la transformée laplacienne de la fonction de transfert $C_{DC}(p)$ s'écrit :

$$\mathrm{C_{DC}(p)} = K_{dc}$$

ou

$$C_{DC}(p) = K_{dc} + \frac{K_{idc}}{p}$$

avec

$$\mathrm{K_{dc}} = A * [\, 1 + B * \mathrm{f(Vc, Vref)}\,] \text{ et } \mathrm{K_{idc}} = C * [\, 1 + D * \mathrm{f(Vc, Vref)}\,], \text{ A, B, C et D}$$

étant des constantes et f(Vc,Vref) étant une fonction dont les variables d'entrée sont les valeurs courantes de la tension d'entrée Vc et la tension de référence Vref.

8. Procédé de réduction du papillotement selon l'une des revendication 5 à 7, comprenant en outre une étape de détermination, par les moyens de régulation, d'une valeur de courant réactif cible circulant entre l'onduleur et le réseau en vue de compenser une énergie réactive d'une charge sur le réseau, et une étape de détermination par le dispositif de calcul de signaux de commande des interrupteurs, de signaux de commande en fonction de la valeur dudit courant réactif cible déterminée.

**Patentansprüche**

1. Blindenergiekompensator (10), der dazu eingerichtet ist, mit einem Wechselstromnetz (14), das M-Phasen aufweist, elektrisch verbunden zu werden, wobei M größer oder gleich 1 ist und der aufweist:

   - M-Verbindungsstellen (28U, 28V, 28W) zu dem elektrischen Wechselstromnetz (14), wobei jede Verbindungsstelle jeweils einer Phase (U, V, W) des Netzes entspricht,
   - wenigstens einen Bus (13) einer Eingangsgleichspannung ($V_c$), der dazu eingerichtet ist, Blindenergie zu liefern,
   - wenigstens einen Wechselrichter (18), der an den Gleichspannungsbus (13) angeschlossen ist und steuerbare elektronische Schalter (34) aufweist, die dazu eingerichtet sind, die Eingangsgleichspannung ($V_c$) in eine Zwischenwechselspannung umzurichten, welche M-Phasen aufweist und jeweils einer Phase des Zwischenstroms entspricht, wobei die einer gleichen Phase entsprechenden Zwischenanschlussstellen jeweils an eine entsprechende Verbindungsstelle angeschlossen sind,
   - eine Vorrichtung (22)zur Berechnung von Steuersignalen der elektronischen Schalter der Wechselrichter, **dadurch gekennzeichnet, dass** er außerdem Regelmittel (22) zur Bestimmung eines Wertes des jeweils zwischen dem Wechselrichter und dem Netz zirkulierenden Sollwirkstroms aufweist, die dazu eingerichtet sind, die laufende Eingangsgleichspannung ($V_c$) bezüglich eines festen Bezugswertes zu regeln;
   wobei die Vorrichtung zur Berechnung von Steuersignalen der Wechselrichter Steuersignale in Abhängigkeit von dem bestimmten laufenden Wert des Sollwirkstroms bestimmt;
   wobei der Wert des Sollwirkstroms ausgehend von der Abweichung zwischen dem Bezugswert und dem Quadrat der Gleichspannung des Bus mittels einer Transferfunktion bestimmt wird, deren Definition sich in Abhängigkeit von dem laufenden Wert der Gleichspannung verändert.

2. Blindenergiekompensator (10) nach Anspruch 1, bei dem der Gleichspannungsbus eine Kondensatorbank (12) aufweist, wobei die Kondensatorbank wenigstens einen Kondensator enthält.

3. Blindenergiekompensator (10) nach Anspruch 1 oder 2, bei dem die Laplace-Transformation der Transferfunktion $C_{DC}(p)$ lautet:

$$C_{DC}(p) = K_{dc}$$

oder

$$C_{DC}(p) = K_{dc} + \frac{K_{idc}}{p}$$

mit

$$K_{dc} = A * [1 + B * f(Vc, Vref)] \quad \text{und} \quad K_{idc} = C * [1 + D * f(Vc, Vref)] ,$$

wobei A, B, C und D Konstanten sind und f(Vc, Vref) eine Funktion ist, deren Eingangsvariablen die laufenden Werte der Eingangsspannung Vc und der Bezugsspannung Vref sind.

**4.** Blindenergiekompensator (10) nach einem der vorhergehenden Ansprüche, bei dem die Regelmittel außerdem dazu eingerichtet sind, einen Wert des zwischen dem jeweiligen Wechselrichter und dem Netz zirkulierenden Sollblindstroms im Hinblick auf die Kompensation einer Blindenergie einer Last an dem Netz zu bestimmen, wobei die Vorrichtung zur Berechnung von Steuersignalen der Wechselrichter Steuersignale in Abhängigkeit von dem bestimmten Wert des Sollblindstroms bestimmt.

**5.** Verfahren zur Verringerung des Flimmerns in einem elektrischen Wechselstromnetz, wobei das Verfahren dazu bestimmt ist, in einem Blindenergiekompensator (10) durchgeführt zu werden, welcher dazu eingerichtet ist, mit einem elektrischen Wechselstromnetz (14) elektrisch verbunden zu werden, das M-Phasen aufweist, wobei M größer oder gleich 1 ist, wobei der Kompensator aufweist:

  - M-Verbindungsstellen (28U, 28V, 28W) zu dem elektrischen Wechselstromnetz (14), wobei jede Verbindungsstelle jeweils einer Phase (U, V, W) des Netzes entspricht,
  - wenigstens einen Bus (13) einer Eingangsgleichspannung (Vc.), der dazu eingerichtet ist, Blindenergie zu liefern,
  - wenigstens einen Wechselrichter (18), der an den Gleichspannungsbus (13) angeschlossen ist und steuerbare elektronische Schalter (34) aufweist, die dazu eingerichtet sind, die Eingangsgleichspannung ($V_c$) in eine Zwischenwechselspannung umzurichten, welche M-Phasen aufweist und jeweils einer Phase des Zwischenstroms entspricht, wobei die einer gleichen Phase entsprechenden Zwischenanschlussstellen jeweils an die entsprechende Verbindungsstelle angeschlossen sind,
  - eine Vorrichtung (22)zur Berechnung von Steuersignalen der elektronischen Schalter der Wechselrichter;

wobei das Verfahren **dadurch gekennzeichnet ist, dass** es folgende Schritte aufweist:

  - Bestimmen eines Wertes des jeweils zwischen dem Wechselrichter und dem Netz zirkulierenden Sollwirkstroms mittels der Regelmittel (22), die dazu eingerichtet sind, die laufende Eingangsgleichspannung ($V_c$) bezüglich eines festen Bezugswertes zu regeln;
  - wobei der Wert des Sollwirkstroms ausgehend von der Abweichung zwischen dem Bezugswert und dem Quadrat der Gleichspannung des Bus mittels einer Transferfunktion bestimmt wird, deren Definition sich in Abhängigkeit von dem laufenden Wert der Gleichspannung verändert;
  - Bestimmen, mittels der Vorrichtung zur Berechnung von Steuersignalen der Wechselrichter, von Steuersignalen in Abhängigkeit von dem bestimmten Wert des Sollwirkstroms.

**6.** Verfahren zur Verringerung des Flimmerns nach Anspruch 1, bei dem die Gleichspannung von einer Kondensatorbank (12) geliefert wird, die wenigstens einen Kondensator aufweist.

**7.** Verfahren zur Verringerung des Flimmerns nach Anspruch 5 oder 6, bei der die Laplace- Transformation der Transferfunktion $C_{DC}(p)$ lautet:

$$C_{DC}(p) = K_{dc}$$

oder

$$C_{DC}(p) = K_{dc} + \frac{K_{idc}}{p}$$

mit

$$K_{dc} = A * [\, 1 + B * f(Vc, Vref)\,] \quad \text{und} \quad K_{idc} = C * [\, 1 + D * f(Vc, Vref)\,]\,,$$

wobei A, B, C und D Konstanten sind und f(Vc, Vref) eine Funktion ist, deren Eingangsvariablen die laufenden Werte der Eingangsspannung Vc und der Bezugsspannung Vref sind.

8. Verfahren zur Verringerung des Flimmerns nach einem der Ansprüche 5 bis 7, das außerdem einen Schritt aufweist, um mittels der Regelmittel einen Wert des zwischen dem jeweiligen Wechselrichter und dem Netz zirkulierenden Sollblindstroms im Hinblick auf die Kompensation einer Blindenergie einer Last an dem Netz zu bestimmen und einen Schritt um durch die Vorrichtung zur Berechnung der Steuersignale der Wechselrichter Steuersignale in Abhängigkeit von dem Wert des so bestimmten Solblindstroms zu bestimmen.

**Claims**

1. Reactive power compensator (10) suitable for being electrically linked to an AC electrical network (14) having M phase(s), M being greater than or equal to 1, of the type comprising:

   - M terminals (28U, 28V, 28W) for connection to the AC electrical network (14), the or each connection terminal corresponding to a phase of the network (U,V,W),
   - at least one bus (13) for DC input voltage ($V_c$) suitable for supplying reactive power,
   - at least one inverter (18) linked to the DC voltage bus (13) and having controllable electronic switches (34) suitable for converting the DC input voltage ($V_c$) into an intermediate AC voltage having M phase(s) and corresponding to a phase of the intermediate current, the intermediate terminals corresponding to one and the same phase being linked to the corresponding connection terminal,
   - a device (22) for computing signals for controlling the electronic switches of the inverters,
   **characterized in that** it furthermore has regulation means (22), suited to determining a target active current value flowing between the inverter and the network that is suitable for regulating the AC input voltage ($V_c$) with respect to a fixed reference value;
   the device for computing signals for controlling the switches determining control signals as a function of the value of said determined target active current;
   the target active current value being determined from the error between the reference value and the square of the DC voltage of the bus by way of a transfer function, the definition of which varies as a function of the current value of said DC voltage.

2. Reactive power compensator (10) according to Claim 1, in which the DC voltage bus comprises a bank of capacitor(s) (12), the bank of capacitor(s) having at least one capacitor.

3. Reactive power compensator (10) according to Claim 1 or 2, in which the Laplace transform of the transfer function $C_{DC}(p)$ is written:

$$C_{DC}(p) = K_{dc}$$

or

$$C_{DC}(p) = K_{dc} + \frac{K_{idc}}{p}$$

with

$$K_{dc} = A*[1+B*f(V_c, V_{ref})]$$

and

$$K_{idc} = C*[1 + D*f(V_c, V_{ref})],$$

A,B,C and D being constants and $f(V_c, V_{ref})$ being a function, the input variables of which are the current values of the input voltage $V_c$ and the reference voltage $V_{ref}$.

4. Reactive power compensator (10) according to any one of the preceding claims, in which the regulation means are furthermore suited to determining a target reactive current value flowing between the inverter and the network with the aim of compensating for a reactive power of a load on the network, the device for computing signals for controlling the switches determining control signals as a function of the value of said determined target reactive current.

5. Method for reducing flickering in an AC electrical network, said method being intended to be implemented in a reactive power compensator (10) suitable for being electrically linked to the AC electrical network (14) having M phase(s), M being greater than or equal to 1, said compensator comprising:

- M terminals (28U, 28V, 28W) for connection to the AC electrical network (14), the or each connection terminal corresponding to a phase of the network (U,V,W),
- at least one bus (13) DC for input voltage ($V_c$) suitable for supplying reactive power,
- at least one inverter (18) linked to the direct-current voltage bus (13) and having controllable electronic switches (34) suitable for converting the DC input voltage ($V_c$) into an intermediate AC voltage having M phase(s) and corresponding to a phase of the intermediate current, the intermediate terminals corresponding to one and the same phase being linked to the corresponding connection terminal,
- a device (22) for computing signals for controlling the electronic switches of the inverters,

said method being **characterized in that** it has the following steps:

- determination, by the regulation means (22), of a target active current value flowing between the inverter and the network that is suitable for regulating the DC input voltage ($V_c$) with respect to a fixed reference value, said target active current value being determined from the error between the reference value and the square of the DC voltage of the bus by way of a transfer function, the definition of which varies as a function of the current value of DC voltage;
- determination, by the device for computing signals for controlling the switches, of the control signals as a function of the value of said determined target active current.

6. Method for reducing flickering according to Claim 5, according to which the DC voltage is supplied by a bank of capacitor(s) (12) having at least one capacitor.

7. Method for reducing flickering according to Claim 5 or 6, according to which the Laplace transform of the transfer function $C_{DC}(p)$ is written:

$$C_{DC}(p) = K_{dc}$$

or

$$C_{DC}(p) = K_{dc} + \frac{K_{idc}}{p}$$

with

$$K_{dc} = A*[1+B*f(V_c, V_{ref})]$$

and

$$K_{idc} = C*[1 + D*f(V_c, V_{ref})],$$

A,B,C and D being constants and $f(V_c, V_{ref})$ being a function, the input variables of which are the current values of the input voltage $V_c$ and the reference voltage $V_{ref}$.

8. Method for reducing flickering according to one of Claims 5 to 7, furthermore comprising a step of determination, by the regulation means, of a target reactive current value flowing between the inverter and the network with the aim of compensating for a reactive power of a load on the network, and a step of determination, by the device for computing signals for controlling the switches, of control signals as a function of the value of said determined target reactive current.

FIG.1

FIG.2

EP 2 602 897 B1

FIG.3

FIG.4

FIG.6

16

FIG.5

EP 2 602 897 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **H. AKAGI.** Modern active filters and traditional passive filters. *Bulletin of the polish academy of sciences - Technical sciences,* 2006, vol. 4 (3